# EUROPEAN PATENT SPECIFICATION

(11) **EP 4 379 746 B1**
(45) Date of publication and mention of the grant of the patent: **11.02.2026**
(21) Application number: 22848295.6
(22) Date of filing: 15.07.2022
(51) Int. Cl.: H01B 13/012, B33Y 10/00, B33Y 80/00, H01B 7/08, H01B 13/00

(54) **METHOD FOR PRODUCING WIRING HARNESS, AND WIRING HARNESS**
VERFAHREN ZUR HERSTELLUNG EINES KABELBAUMS UND KABELBAUM
PROCÉDÉ DE PRODUCTION DE FAISCEAU ÉLECTRIQUE ET FAISCEAU ÉLECTRIQUE

(30) Priority: 30.07.2021 CN 202110875931
(43) Date of publication of application: 05.06.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2022/105973
(87) International publication number: WO 2023/005690

(56) References cited:
- CN-A- 108 973 029
- CN-A- 109 774 621
- CN-A- 109 774 621
- CN-A- 113 593 753
- CN-U- 207 166 113
- CN-U- 216 388 788
- DE-A1- 102007 024 101
- JP-A- 2002 359 912
- US-A1- 2019 148 037
- US-A1- 2019 333 657

## Description

### RELATED APPLICATION

The present disclosure claims priority to Chinese Invention Patent Application No. CN202110875931.6, filed on July 30, 2021, and entitled 'wire harness production method and wire harness'.

### TECHNICAL FIELD

The present disclosure relates to the technical field of electronic components, and particularly to a method for producing a wire harness, and a wire harness.

### BACKGROUND

Electrical connection needs to be realized by wire harness. The wire harness is mainly composed of electrical wires that are served as conductors. The electrical wires are produced through the processes of conductor drawing, stranding, annealing, extrusion molding of insulating layer and so on, so the production process is complex, and the processing cost is high. In addition, during the production of the wire harness using electrical wires, it is also necessary to cut the electrical wires to a fixed length, strip off the insulating layers, and then lay and fix the electrical wires one by one according to the loop requirements.

The method for production wire harness and wire harness are known in the prior art, e.g., CN109774621A, US2019/148037A1, US2019/333657A1 and DE102007024101A1.

### SUMMARY

An objective of the present disclosure is to provide a method for producing a wire harness, and a wire harness, so as to alleviate the technical problems of complex production process and high processing cost of a wire harness.

The above objective of the present disclosure can be achieved by a method for producing a wire harness in accordance with claim 1 and a wire harness in accordance with claim 7.

Preferred features of the present invention are set out in the dependent claims.

The present disclosure has the following characteristics and advantages:
In the method for producing a wire harness, a plurality of wire harness conductors are firstly arranged according to an electrical connection function to be realized, and then an insulator is formed by additive manufacturing to realize insulation and fixation. The conductive loop may be connected to an external electrical appliance to realize the electrical connection function of the wire harness. The wire harness production method has the following advantages:
(1) The step of extrusion-molding of the insulating layer of the electrical wire may be omitted, thereby shortening the processing time of the wire harness, reducing the cost of raw materials, and reducing the production cost of the electrical wire of the wire harness.
(2) The method for producing a wire harness is suitable for large-batch and automatic production, thereby improving production efficiency and realizing rapid production.
(3) The insulator may be integrally disposed around pre-arranged wire harness conductors to realize integral insulation, and the insulator can be conveniently and quickly disposed.
(4) The produced wire harness is convenient for being mounted and connected with external electrical appliances, thereby reducing the mounting man-hours and saving the space.
(5) The molding housing of a profile modeling structure may be adopted, and the shape of the molding housing is adapted to the mounting environment, which extends the application environment of the produced wire harness and makes the wire harness adaptable to different product structures, thereby facilitating the use of the wire harness on the electrical appliances in complex mounting environments.
(6) The molding housing may be a component of the electrical appliance, thereby realizing the integrated production of the component and the wire harness, and achieving the rapid mounting and dismounting of the wire harness.

### BRIEF DESCRIPTION OF DRAWINGS

The following drawings are only for schematic illustration and explanation of the present disclosure, rather than limiting the scope thereof. In the drawings:
FIG. 1 illustrates a schematic structural diagram of a method for producing a wire harness according to the present disclosure;
FIG. 2 illustrates a schematic working diagram of a method for producing a wire harness according to the present disclosure;
FIG. 3 illustrates a schematic structural diagram of a molding housing and a supporting piece in a method for producing a wire harness according to the present disclosure;
Figs. 4 and 5 illustrate schematic partial views of a wire harness conductor and an insulator; and
FIG. 6 illustrates a schematic diagram of a wire feeder in a method for producing a wire harness according to the present disclosure.

### DESCRIPTION OF EMBODIMENTS

For a clearer understanding of the technical features, objectives and effects of the present disclosure, specific embodiments of the present disclosure will now be described with reference to the drawings. In the description of the present disclosure, unless otherwise specified, 'a plurality of' means two or more.

### First Embodiments

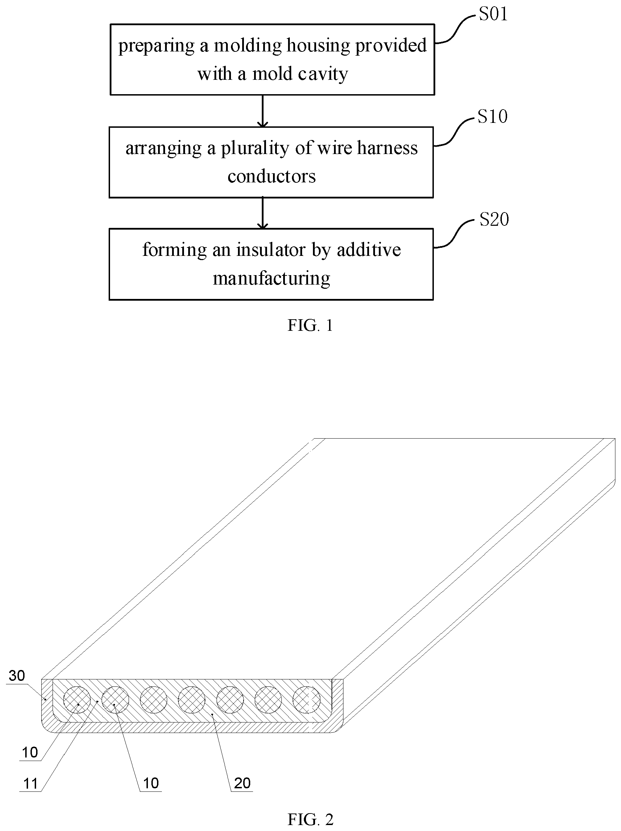

The present disclosure provides a method for producing a wire harness, as illustrated in FIG. 1, including: Step S10: arranging a plurality of wire harness conductors 10; and Step S20: forming an insulator 20 by additive manufacturing, gaps 11 being disposed between the wire harness conductors 10, and the insulator 20 wrapping the wire harness conductors 10 and being filled in the gaps 11.

In the method for producing a wire harness, a plurality of wire harness conductors 10 are firstly arranged according to an electrical connection function to be realized, and then an insulator 20 is additively formed to realize insulation and fixation. The conductive loop may be connected to an external electrical appliance to realize the electrical connection function of the wire harness. The method for producing a wire harness has the following advantages: (1) The step of extrusion-molding of the insulating layer of the electrical wire is omitted, the processing time of the wire harness is shortened, the cost of raw material is reduced, and the production cost of the electrical wire of the wire harness is reduced. (2) The method is suitable for large-batch and automatic production, thereby improving the production efficiency and realizing rapid production. (3) The insulator 20 may be integrally disposed around the pre-arranged wire harness conductors 10 to realize integral insulation, and the insulator 20 can be conveniently and quickly disposed. (4) The produced wire harness is convenient for being mounted and connected with external electrical appliances, thereby reducing the mounting man-hours and saving the space.

In an embodiment, Step S10 and Step S20 may be sequentially and alternately performed for multiple times, i.e., it is possible to arrange the wire harness conductors 10 and mold the insulator 20 for multiple times. In another embodiment, all the conductive wires of the wire harness are arranged at one time, and then the insulator 20 is formed, thereby improving the production efficiency.

A tail end of the wire harness conductor 10 may be connected to a gold finger, a crimping terminal, a welding terminal or a welding electrical wire to be conveniently connected to circuits of other electrical appliances.

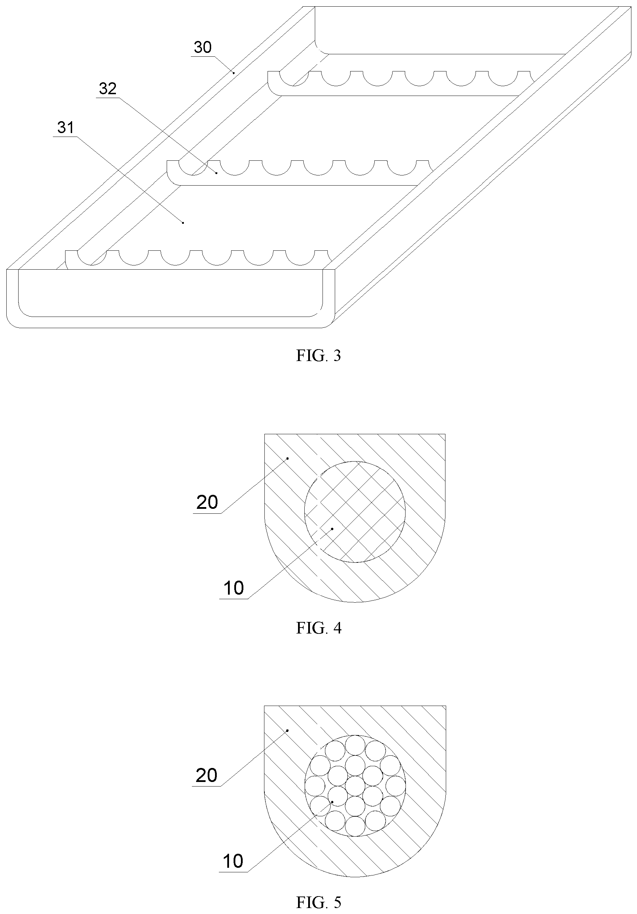

In the method for producing a wire harness, instead of providing an insulating sheath or an insulating paint on an outer side of the wire harness conductor 10, , a unified insulator 20 may be formed by Step S20. In some embodiments, as illustrated in FIG. 4 that illustrates a schematic partial view of a wire harness produced by the method for producing a wire harness, in which the wire harness conductor 10 is a single-core structure, that is, the wire harness conductor 10 is a single conductive wire. In some embodiments, as illustrated in FIG. 5 that illustrates a schematic partial view of a wire harness produced by the method for producing a wire harness, in which the wire harness conductor 10 is a multi-core structure, i.e., the wire harness conductor 10 includes a plurality of conductive wires, and exemplarily, the conductive wires are flexible conductive wires.

According to the invention, the method for producing a wire harness includes Step S01 performed before Step S10, and Step S01 includes: preparing a molding housing 30 provided with a mold cavity 31. In Step S10, the wire harness conductors 10 are arranged in the mold cavity 31. In Step S20, the insulator 20 is formed in the mold cavity 31. As illustrated in FIGS. 2 and 3, the molding housing 30 defines the shape and size of the insulator 20, and the molding housing 30 conforming to the course of the wire harness conductor 10 is prepared according to the requirements of the wire harness to be produced.

In an embodiment, the wire harness conductor 10, the insulator 20 and the molding housing 30 form an integrated structure, i.e., the molding housing 30 serves as a part of the produced wire harness.

In another embodiment, the method for producing a wire harness includes Step S30 performed after Step S20, and Step S30 includes: taking the insulator 20 and the wrapped wire harness conductors 10 out of the mold cavity 31, and the molding housing 30 and the mold cavity 31 serve as tooling for producing the wire harness.

The molding housing 30 may be a profile modeling structure, the shape of which is adapted to the mounting environment. Under the condition that the molding housing 30 serves as tooling, the molded insulator 20 of the wire harness may be in a profile modeling structure, which extends the application environment of the produced wire harness and makes the wire harness adaptable to different product structures, thereby facilitating the use of the wire harness on the electrical appliances in complex mounting environments. Under the condition that the molding housing 30 serves as a part of the produced wire harness, the molding housing 30 can adapt to the application environment, which extends the application environment of the produced wire harness and makes the wire harness adaptable to different product structures, thereby facilitating the use of the wire harness on the electrical appliances in complex mounting environments.

Further, the molding housing 30 serves as a part of the produced wire harness, and is also a component of the electrical appliance, thereby realizing the integrated production of the component and the wire harness, and facilitating the rapid mounting and dismounting of the wire harness.

According to the invention, in Step S10, at least two of the wire harness conductors 10 are electrically connected by one or more selected from crimping, welding, 3D printing connection, laser sintering connection and connection point printing, so that the plurality of wire harness conductors 10 in the wire harness can realize the function of complex circuits.

In an embodiment, in Step S10, the wire harness conductor 10 may be extended along a straight line or a curved line. As illustrated in FIG. 2, the plurality of wire harness conductors 10 are distributed in a same plane.

In some other embodiments, in Step S10, the plurality of wire harness conductors 10 are distributed and extended in a space, and for example, the wire harness is extended along a spatial curve.

In an embodiment, Step S10 adopts one or more selected from a 3D printing process, a laser powder sintering process, a metal injection molding process, a laser subtracting process, a conductive ink printing process and a printed circuit board process.

Specifically, both the 3D printing process and the laser powder sintering process are additive processes and use metal powder or a conductive material for melt printing, and the molding housing 30 may be used for molding. The metal injection molding process adopts a mold, so that the metal can be molded in the mold and then put into the mold cavity 31. The laser subtracting process is to cut off unnecessary parts from a sheet-shaped or foil-shaped metal material that has been shaped, leaving the wire harness conductor 10. The conductive ink printing process is to print conductive ink on a substrate to form a conductive loop, which together with the substrate is used as the wire harness conductor 10. The printed circuit board process is to obtain a conductive loop by etching a copper plate, and take the conductive loop as the wire harness conductor 10.

In another embodiment, in Step S10, the wire harness conductors 10 are arranged by being laid. A conductive wire may be selected as the wire harness conductor 10, and the selected conductive wire may be omitted from an insulating sheath and an insulating paint. Specifically, the wire harness conductors 10 may be laid by hand or by a device.

The method for producing a wire harness adopts a wire feeder 40. In step S10, the wire harness conductor 10 is delivered into the mold cavity 31 by the wire feeder 40, which is beneficial to ensuring the accuracy of the arrived position of the wire harness conductor 10. The wire feeder 40 can make a spatial arrangement of the wire harness conductors 10 in the mold cavity 31 and on supporting pieces 32.

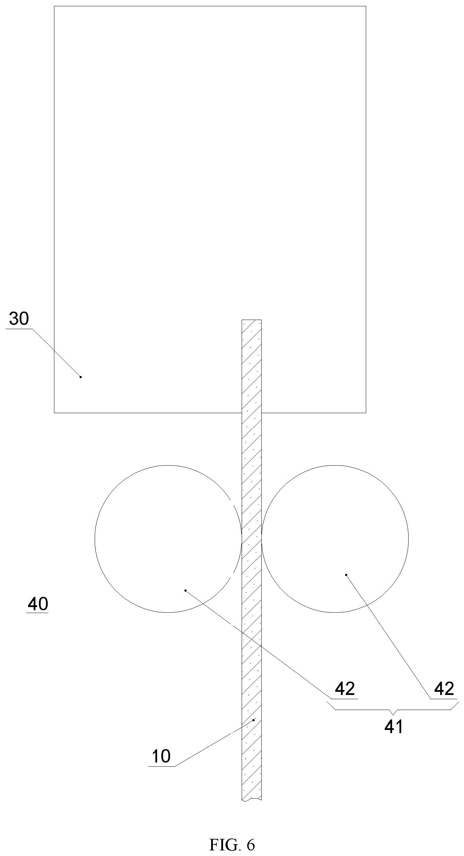

Further, the wire feeder 40 includes a roller mechanism 41, which includes at least two rollers 42 disposed at an interval. As illustrated in FIG. 6, the wire harness conductor 10 passes between the two rollers 42, and when the rollers 42 rotate, they drive the wire harness conductor 10 to translate into the mold cavity 31 by friction, thereby completing the arrangement of the wire harness conductor 10.

According to the invention, the mold cavity 31 is provided therein with a supporting piece 32 which support the wire harness conductor 10 so that the insulator 20 surrounds the wire harness conductor 10, and the supporting piece 32 also plays a role of positioning the wire harness conductor 10. A plurality of supporting pieces 32 is disposed in the mold cavity 31. The insulator 20 forms an integrated structure with the supporting pieces 32, and the supporting pieces 32 are taken as a part of the produced wire harness. The supporting piece 32 and the insulator 20 are made of a same material. In Step S20, the insulator 20 is molded to wrap the wire harness conductor 10, and the supporting piece 32 is integrally formed with the insulating layer to better ensure the insulating performance of the wire harness.

In an embodiment, Step S20 adopts a 3D printing process. Methods not covered by the current invention are an injection molding process, a spraying process or a dip molding process to mold the insulator 20 around the wire harness conductor 10. Specifically, the 3D printing process is to melt and print an insulating material into the mold cavity 31. The injection molding process is to take an injection mold as the molding housing 30, and integrally injects an insulating material into the injection mold. The spraying process is to spray an insulating material on the conductor to form the insulating layer. The dip molding process is to immerse the mold cavity 31 and the conductor into an insulating material, so that the insulating material can adhere to the conductor. Exemplarily, the insulator 20 is molded using the molding housing 30. In some cases, for example, when the insulator 20 is formed by the dip molding, the molding housing 30 can be omitted.

### Second Embodiments

The present disclosure provides a wire harness, which is produced by the above described method for producing a wire harness. The wire harness includes wire harness conductors 10 and an insulator 20, gaps 11 are disposed between the wire harness conductors 10, and the insulator 20 wraps the wire harness conductors 10 and is filled in the gaps 11.

In an embodiment, the wire harness conductor 10, the insulator 20 and the molding housing 30 form an integrated structure. Since some wire harnesses have complex shapes, the insulator 20 is filled in a way of integral insulation, so it is possible to omit multiple steps in the existing wire harness processing technology, thereby saving the processing time, improving the production efficiency and reducing the wire harness cost. Since the material of the insulator 20 has certain adhesiveness, it is difficult to remove the molding housing. Therefore, when designing the wire harness, the molding housing 30 may be directly set as a part of the wire harness to form an integrated structure, and it is unnecessary to remove the molding housing 30 from the insulator 20.

The molding housing 30 may be a profile modeling structure, the shape of which is adapted to the mounting environment. Under the condition that the molding housing 30 serves as tooling, the molded insulator 20 of the wire harness may be in a profile modeling structure, which extends the application environment of the produced wire harness and makes the wire harness adaptable to different product structures, thereby facilitating the use of the wire harness on the electrical appliances in complex mounting environments. Under the condition that the molding housing 30 serves as a part of the produced wire harness, the molding housing 30 can adapt to the application environment, which extends the application environment of the produced wire harness and makes the wire harness adaptable to different product structures, thereby facilitating the use of the wire harness on the electrical appliances in complex mounting environments.

Further, the molding housing 30 serves as a part of the produced wire harness, and is also a component of the electrical appliance, thereby realizing the integrated production of the component and the wire harness, and facilitating the rapid mounting and dismounting of the wire harness.

At least two of the wire harness conductors 10 are electrically connected by one or more selected from crimping, welding, 3D printing connection, laser sintering connection and connection point printing, so that the plurality of wire harness conductors 10 in the wire harness can realize the function of complex circuits.

In an embodiment, the wire harness conductor 10 may be extended along a straight line or a curved line. As illustrated in FIG. 2, the plurality of wire harness conductors 10 are distributed in a same plane. When the wire harness is connected to few electrical devices, two ends of the wire harness are connected to different electrical devices, and the wire harness conductors are extended according to an assembly route.

In an embodiment, the plurality of wire harness conductors are distributed in a same plane, or distributed and extended in a space. A complex wire harness has a plurality of branch structures that are used to be connected to different electrical devices. At present, electrical devices usually have a large planar or curved structure, so that the complex wire harness can be directly arranged on the electrical devices, which can also facilitate the pouring of the insulator 20.

According to the invention, the insulator is provided with a supporting piece 32 including a side surface and a peripheral surface. The side surface and at least the peripheral surface are connected to the insulator 20, and the wire harness conductor 10 passes through the side surface or contacts the peripheral surface. During the arrangement of the wire harness conductors 10, some wire harness conductors 10 may have a long length and low hardness, so that middle parts of these wire harness conductors 10 will droop and contact the molding housing 30, and these wire harness conductor 10 will not be isolated from the molding housing 30 even if the insulator 20 is filled, which causes short circuit of these wire harness conductors 10, resulting in a damage of the wire harness and even a safety accident. Therefore, in Step S02 performed before Step S10, a supporting piece is disposed in the mold cavity to support the wire harness conductor 10 to ensure that the filled insulator 20 can isolate the wire harness conductor 10 from the molding housing 30. In addition, when there are a plurality of wire harness conductors 10, they may be supported by the supporting pieces 32, so that the insulator 20 can fully isolate the wire harness conductors 10 from each other to ensure the accuracy of the loop of the wire harness.

The supporting piece 32 also plays a role of positioning the wire harness conductor 10. A plurality of supporting pieces 32 is disposed in the mold cavity 31. The insulator 20 forms an integrated structure with the supporting pieces 32, and the supporting pieces 32 are taken as a part of the produced wire harness. The supporting piece 32 and the insulator 20 are made of a same material. In Step S20, the insulator 20 is molded to wrap the wire harness conductor 10, and the supporting piece 32 is integrally formed with the insulating layer to better ensure the insulating performance of the wire harness.

In an embodiment, the insulator 20 is made of one or more selected from the group consisting of polyvinyl chloride, polyurethane, nylon, polypropylene, silicone rubber, crosslinked polyolefin, synthetic rubber, polyurethane elastomer, crosslinked polyethylene and polyethylene.

In an embodiment, the wire harness conductor 10 is made of a metal material, which is one or more selected from the group consisting of nickel or alloy thereof, cadmium or alloy thereof, zirconium or alloy thereof, chromium or alloy thereof, cobalt or alloy thereof, manganese or alloy thereof, aluminum or alloy thereof, tin or alloy thereof, titanium or alloy thereof, zinc or alloy thereof, copper or alloy thereof, silver or alloy thereof, and gold or alloy thereof. The most commonly used metal material for the conductor is copper or copper alloy, because the conductivity of copper is good among metals, and copper is not a precious metal while being convenient for processing and good in ductility. However, with the increasing price of copper, the material cost of the conductor made of copper is higher and higher. To this end, people begin to look for alternatives to copper to reduce the cost. The content of metallic aluminum in the earth's crust is about 7.73%, and the price of aluminum is relatively low due to the optimization of its refining technology. In addition, compared with copper, aluminum is lighter, and its conductivity is second only to copper, so that aluminum or aluminum alloy can partially replace copper or copper alloy in the field of electrical connection.

In an embodiment, the wire harness conductor 10 is made of a non-metal material, which is one or more selected from the group consisting of conductive ceramic, carbon-containing conductor, solid electrolyte, mixed conductor and conductive polymer material.

In an embodiment, the carbon-containing conductor is made of one or more selected from the group consisting of graphite powder, carbon nanotube material and graphene material.

In an embodiment, the wire harness conductor 10 has a cross-sectional area of 0.1 mm² to 260 mm². In the wire harness, the cross-sectional area of the wire harness conductor 10 determines the current that the wire harness conductor 10 can conduct. In general, a wire harness conductor 10 for signal conduction is able to conduct a small current and has a small cross-sectional area. For example, a wire harness conductor 10 of a signal wire in an automotive wire harness may have a minimum cross-sectional area of 0.1 mm². However, a wire harness conductor 10 for power conduction is able to conduct a large current and has a large cross-sectional area. For example, a wire harness conductor 10 of a wire harness of an automobile battery may have a maximum cross-sectional area of 260 mm². When having a small cross-sectional area, the wire harness conductor 10 may be laid by a wire feeder, and when having a large cross-sectional area, the wire harness conductor 10 may be 3D-printed, or the formed conductor 2 may be directly laid.

In an embodiment, the insulator 20 is made of one or more selected from the group consisting of polyvinyl chloride, polyurethane, nylon, polypropylene, silicone rubber, crosslinked polyolefin, synthetic rubber, polyurethane elastomer, crosslinked polyethylene and polyethylene.

In an embodiment, the insulator 20 has a breakdown strength of 0.3 KV/mm to 35 KV/mm. The breakdown strength is also called a dielectric breakdown strength, which means a highest electric-field strength that a material can withstand without being damaged (broken down) in an electric field. When the breakdown strength of the insulator 20 is lower than 0.3 KV/mm, some thin insulators 20 may be broken down under a normal voltage, resulting in invalid insulation. When the breakdown strength of the insulator 20 is higher than 35 KV/mm, the choice of a material with too high breakdown strength will increase the cost of an integrated wire harness assembly and cause design waste, because the general vehicle environment does not have high voltage greater than 35 KV.

In an embodiment, the insulator 20 has a thickness of 0.03 mm to 5 mm. If the thickness of the insulator 20 is less than 0.03 mm, it not only cannot ensure that the breakdown voltage of the insulator 20 is higher than the working voltage, but also cannot guarantee the wear resistance of the insulator 20, which causes the insulator 20 to be damaged after being scraped and abraded for many times with the wire harness conductor 10 being exposed, which will lead to a current leakage or a short circuit, resulting in a wire damage and a functional failure. When the thickness of the insulator 20 is 5 mm, the breakdown voltage, the insulation resistance and the wear resistance of the insulator 20 can meet the requirements. However, if the thickness is greater than 5 mm, the insulation layer will have defects such as air holes and collapse generated in the processing process due to the large thickness of the insulator 20, which degrades the performance of the insulation layer and wastes the material thereof, and increases the processing procedures and time. Therefore, the inventor chooses the thickness of the insulator 20 as 0.03 mm to 5 mm.

The wire harness can be adapted to large-batch and automatic production to improve the production efficiency and realize rapid production. In addition, integral insulation is realized and the insulator 20 can be conveniently and quickly disposed. The wire harness is convenient for being mounted and connected with external electrical appliances, reduces the mounting man-hours, is space-saving, allows to eliminate the step of extrusion-molding of the insulating layer of the electrical wire, shortens the processing time of the wire harness, reduces the cost of raw materials, and reduces the production cost of the wire harness.

## Claims

1. A method for producing a wire harness, comprising:
Step S10: arranging a plurality of wire harness conductors (10); and
Step S20: forming an insulator (20) by additive manufacturing;
wherein gaps are disposed between the wire harness conductors (10), and the insulator (20) wraps the wire harness conductors (10) and is filled in the gaps; wherein the method further comprises Step S01 performed before Step S10,
wherein Step S01 comprises: preparing a molding housing (30) provided with a mold cavity (31);
in Step S10, the wire harness conductors (10) are arranged in the mold cavity (31); and
in Step S20, the insulator (20) is formed in the mold cavity (31); and
**characterized in that**, the method further comprises Step S02 performed before Step S10, wherein Step S02 comprises: disposing supporting pieces (32) in the mold cavity (31) at intervals along an axial direction of the wire harness conductors (10) for supporting the wire harness conductors (10), with each supporting piece (32) comprising a side surface (321) and a peripheral surface (322), wherein the side surface (321) and at least the peripheral surface (322) are connected to the insulator (20), the wire harness conductors (10) pass through the side surface (321) or contact the peripheral surface (322), the insulator (20) forms an integrated structure with the supporting pieces (32), the supporting pieces (32) serve as a part of the produced wire harness, and the supporting piece (32) and the insulator (20) are made of a same material; and
wherein in Step S10, at least two of the wire harness conductors (10) are electrically connected to each other, to enable the plurality of wire harness conductors (10) in the wire harness to realize a function of complex circuits.

2. The method for producing a wire harness according to claim 1, further comprising Step S30 performed after Step S20, wherein Step S30 comprises: taking the insulator (20) and the wrapped wire harness conductors (10) out of the mold cavity (31).

3. The method for producing a wire harness according to claim 1, wherein in Step S10, at least two of the wire harness conductors (10) are electrically connected by one or more selected from crimping, welding, 3D printing connection, laser sintering connection and connection point printing.

4. The method for producing a wire harness according to claim 1, wherein in Step S10, the wire harness conductor (10) is extended along a straight line or a curved line;
or,
in Step S10, the plurality of wire harness conductors (10) are distributed in a same plane, or distributed and extended in a space.

5. The method for producing a wire harness according to claim 1, wherein Step S10 adopts one or more selected from a 3D printing process, a laser powder sintering process, a metal injection molding process, a laser subtracting process, a conductive ink printing process and a printed circuit board process;
or,
in Step S20, the insulator (20) is formed by a 3D printing process.

6. The method for producing a wire harness according to claim 1, wherein the method for producing a wire harness adopts a wire feeder (40); in step S10, the wire harness conductors (10) are delivered into the mold cavity (31) by the wire feeder (40).

7. A wire which is produced by the method for producing a wire harness according to any one of claims 1 to 6, wherein the wire harness comprises a plurality of wire harness conductors (10) and an insulator (20), gaps are disposed between the wire harness conductors (10), and the insulator (20) wraps the wire harness conductors (10) and is filled in the gaps, supporting pieces (32) are provided in the insulator (20) at intervals along an axial direction of the wire harness conductors (10) for supporting the wire harness conductors (10), each of the supporting piece (32) comprises a side surface (321) and a peripheral surface (322); wherein the side surface (321) and at least the peripheral surface (322) are connected to the insulator (20), the wire harness conductors (10) pass through the side surface (321) or contact the peripheral surface (322), the insulator (20) forms an integrated structure with the supporting pieces (32), the supporting pieces (32) serve as a part of the produced wire harness, and the supporting piece (32) and the insulator (20) are made of a same material; and
at least two of the wire harness conductors (10) are electrically connected to each other, to enable the plurality of wire harness conductors (10) in the wire harness to realize a function of complex circuits.

8. The wire harness according to claim 7, wherein the wire harness comprises a housing (30) provided with a mold cavity (31);
the wire harness conductors (10) are arranged in the mold cavity (31);
and
the wire harness conductors (10), the insulator (20) and the molding housing (30) form an integrated structure.

9. The wire harness according to claim 7, wherein
the wire harness conductor (10) is extended along a straight line or a curved line;
or,
the plurality of wire harness conductors (10) are distributed in a same plane, or distributed and extended in a space.

10. The wire harness according to claim 7, wherein a material of the wire harness conductor (10) comprises a non-metal material, which is one or more selected from the group consisting of conductive ceramic, carbon-containing conductor, solid electrolyte, mixed conductor and conductive polymer material;
preferably wherein,
the carbon-containing conductor is one or more selected from the group consisting of graphite powder, carbon nanotube material and graphene material.

11. The wire harness according to claim 7, wherein the wire harness conductor (10) has a cross-sectional area of 0. 1 mm² to 260 mm²;
or,
the insulator (20) has a thickness of 0.03 mm to 5 mm.

12. The wire harness according to claim 7, wherein the insulator (20) is made of one or more selected from the group consisting of polyvinyl chloride, polyurethane, nylon, polypropylene, silicone rubber, crosslinked polyolefin, synthetic rubber, polyurethane elastomer, crosslinked polyethylene and polyethylene;
preferably wherein,
the insulator (20) has a breakdown strength of 0.3 KV/mm to 35 KV/mm.

## Patentansprüche

1. Verfahren zur Herstellung eines Kabelbaums, umfassend:
Schritt S10: Anordnen einer Mehrzahl von Kabelbaumleitern (10); und
Schritt S20: Bilden eines Isolators (20) durch additive Fertigung;
wobei zwischen den Kabelbaumleitern (10) Lücken angeordnet sind und der Isolator (20) die Kabelbaumleiter (10) umwickelt und die Lücken ausfüllt; wobei das Verfahren ferner umfasst, dass Schritt S01 vor Schritt S10 durchgeführt wird,
wobei Schritt S01 umfasst: Vorbereiten eines Formgehäuses (30), das mit einer Formkavität (31) versehen ist;
wobei in Schritt S10 die Kabelbaumleiter (10) in der Formkavität (31) angeordnet werden; und
in Schritt S20 der Isolator (20) in der Formkavität (31) gebildet wird; und
**dadurch gekennzeichnet, dass** das Verfahren ferner umfasst, dass Schritt S02 vor Schritt S10 durchgeführt wird, wobei Schritt S02 umfasst: Anordnen von Stützstücken (32) in der Formkavität (31) in Abständen entlang einer axialen Richtung der Kabelbaumleiter (10) zum Abstützen der Kabelbaumleiter (10), wobei jedes Stützstück (32) eine Seitenfläche (321) und eine Umfangsfläche (322) umfasst, wobei die Seitenfläche (321) und mindestens die Umfangsfläche (322) mit dem Isolator (20) verbunden sind, wobei die Kabelbaumleiter (10) durch die Seitenfläche (321) hindurchgeführt werden oder die Umfangsfläche (322) berühren, wobei der Isolator (20) eine integrierte Struktur mit den Stützstücken (32) bildet, wobei die Stützstücke (32) als Teil des hergestellten Kabelbaums dienen und wobei das Stützstück (32) und der Isolator (20) aus einem gleichen Material hergestellt werden; und
wobei in Schritt S10 mindestens zwei der Kabelbaumleiter (10) elektrisch miteinander verbunden werden, um es der Mehrzahl von Kabelbaumleitern (10) im Kabelbaum zu ermöglichen, eine Funktion komplexer Schaltungen zu realisieren.

2. Verfahren zur Herstellung eines Kabelbaums nach Anspruch 1, das ferner umfasst, dass Schritt S30 nach Schritt S20 durchgeführt wird, wobei Schritt S30 umfasst: Entnehmen des Isolators (20) und der umwickelten Kabelbaumleiter (10) aus der Formkavität (31).

3. Verfahren zur Herstellung eines Kabelbaums nach Anspruch 1, wobei in Schritt S10 mindestens zwei der Kabelbaumleiter (10) durch eines oder mehrere ausgewählt aus Crimpen, Schweißen, 3D-DruckVerbindung, Lasersinter-Verbindung und Verbindungspunkt-Druck elektrisch verbunden werden.

4. Verfahren zur Herstellung eines Kabelbaums nach Anspruch 1, wobei sich in Schritt S10 der Kabelbaumleiter (10) entlang einer geraden Linie oder einer gekrümmten Linie erstreckt;
oder
in Schritt S10 die Mehrzahl von Kabelbaumleitern (10) in einer gleichen Ebene verteilt oder in einem Raum verteilt sind und sich erstrecken.

5. Verfahren zur Herstellung eines Kabelbaums nach Anspruch 1, wobei Schritt S10 eines oder mehrere ausgewählt aus einem 3D-Druckverfahren, einem Laser-Pulver-Sinterverfahren, einem Metall-Spritzgussverfahren, einem Lasersubtraktionsverfahren, einem leitfähigen Tintenstrahldruckverfahren und einem Leiterplattenverfahren verwendet;
oder
wobei in Schritt S20 der Isolator (20) durch ein 3D-Druckverfahren gebildet wird.

6. Verfahren zur Herstellung eines Kabelbaums nach Anspruch 1, wobei das Verfahren zur Herstellung eines Kabelbaums einen Drahtzuführer (40) verwendet; wobei in Schritt S10 die Kabelbaumleiter (10) durch den Drahtzuführer (40) in die Formkavität (31) zugeführt werden.

7. Draht, der durch das Verfahren zur Herstellung eines Kabelbaums nach einem der Ansprüche 1 bis 6 hergestellt wird, wobei der Kabelbaum eine Mehrzahl von Kabelbaumleitern (10) und einen Isolator (20) umfasst, wobei Lücken zwischen den Kabelbaumleitern (10) angeordnet sind und der Isolator (20) die Kabelbaumleiter (10) umwickelt und die Lücken ausfüllt, wobei Stützstücke (32) im Isolator (20) in Abständen entlang einer axialen Richtung der Kabelbaumleiter (10) zum Abstützen der Kabelbaumleiter (10) vorgesehen sind, jedes der Stützstücke (32) eine Seitenfläche (321) und eine Umfangsfläche (322) umfasst; wobei die Seitenfläche (321) und mindestens die Umfangsfläche (322) mit dem Isolator (20) verbunden sind, wobei die Kabelbaumleiter (10) durch die Seitenfläche (321) hindurchgeführt werden oder die Umfangsfläche (322) berühren, wobei der Isolator (20) eine integrierte Struktur mit den Stützstücken (32) bildet, wobei die Stützstücke (32) als Teil des hergestellten Kabelbaums dienen, und wobei das Stützstück (32) und der Isolator (20) aus einem gleichen Material hergestellt werden; und
mindestens zwei der Kabelbaumleiter (10) elektrisch miteinander verbunden sind, um es der Mehrzahl von Kabelbaumleitern (10) im Kabelbaum zu ermöglichen, eine Funktion komplexer Schaltungen zu realisieren.

8. Kabelbaum nach Anspruch 7, wobei der Kabelbaum ein Gehäuse (30) umfasst, das mit einer Formkavität (31) versehen ist;
wobei die Kabelbaumleiter (10) in der Formkavität (31) angeordnet sind; und
wobei die Kabelbaumleiter (10), der Isolator (20) und das Formgehäuse (30) eine integrierte Struktur bilden.

9. Kabelbaum nach Anspruch 7, wobei
sich der Kabelbaumleiter (10) entlang einer geraden Linie oder einer gekrümmten Linie erstreckt; oder
die Mehrzahl von Kabelbaumleitern (10) in einer gleichen Ebene verteilt sind oder in einem Raum verteilt sind und sich erstrecken.

10. Kabelbaum nach Anspruch 7, wobei ein Material des Kabelbaumleiters (10) ein nicht-metallisches Material umfasst, das eines oder mehrere ausgewählt aus der Gruppe bestehend aus leitfähiger Keramik, kohlenstoffhaltigem Leiter, Festelektrolyt, Mischleiter und leitfähigem Polymermaterial ist;
vorzugsweise wobei
der kohlenstoffhaltige Leiter einer oder mehrere ausgewählt aus der Gruppe bestehend aus Graphitpulver, Kohlenstoffnanoröhrenmaterial und Graphenmaterial ist.

11. Kabelbaum nach Anspruch 7, wobei der Kabelbaumleiter (10) eine Querschnittsfläche von 0,1 mm² bis 260 mm²aufweist;
oder
der Isolator (20) eine Dicke von 0,03 mm bis 5 mm aufweist.

12. Kabelbaum nach Anspruch 7, wobei der Isolator (20) aus einem oder mehreren ausgewählt aus der Gruppe bestehend aus Polyvinylchlorid, Polyurethan, Nylon, Polypropylen, Silikonkautschuk, vernetztem Polyolefin, synthetischem Kautschuk, Polyurethan-Elastomer, vernetztem Polyethylen und Polyethylen hergestellt ist;
vorzugsweise wobei
der Isolator (20) eine Durchschlagfestigkeit von 0,3 kV/mm bis 35 kV/mm aufweist.

## Revendications

1. Procédé de production d'un faisceau de fils électriques, comprenant :
Étape S10 : l'agencement d'une pluralité de conducteurs de faisceau de fils électriques (10) ; et
Étape S20 : la formation d'un isolant (20) par fabrication additive ;
dans lequel des espaces sont ménagés entre les conducteurs de faisceau de fils électriques (10), et l'isolant (20) enveloppe les conducteurs de faisceau de fils électriques (10) et est rempli dans les espaces ;
dans lequel le procédé comprend en outre l'étape S01 réalisée avant l'étape S10,
dans lequel l'étape S01 comprend : la préparation d'un logement de moulage (30) doté d'une cavité de moule (31) ;
à l'étape S10, les conducteurs de faisceau de fils électriques (10) sont agencés dans la cavité de moule (31) ; et
à l'étape S20, l'isolant (20) est formé dans la cavité de moule (31) ; et
**caractérisé en ce que** le procédé comprend en outre l'étape S02 réalisée avant l'étape S10, dans lequel l'étape S02 comprend : la disposition de pièces de support (32) dans la cavité de moule (31) à des intervalles le long d'une direction axiale des conducteurs de faisceau de fils électriques (10) afin de supporter les conducteurs de faisceau de fils électriques (10), chaque pièce de support (32) comprenant une surface latérale (321) et une surface périphérique (322), dans laquelle la surface latérale (321) et au moins la surface périphérique (322) sont connectées à l'isolant (20), les conducteurs de faisceau de fils électriques (10) traversent la surface latérale (321) ou entrent en contact avec la surface périphérique (322), l'isolant (20) forme une structure intégrée avec les pièces de support (32), les pièces de support (32) servent de partie du faisceau de fils électriques produit, et la pièce de support (32) et l'isolant (20) sont composés d'un même matériau ; et
dans lequel à l'étape S10, au moins deux des conducteurs de faisceau de fils électriques (10) sont électriquement connectés l'un à l'autre, pour permettre à la pluralité de conducteurs de faisceau de fils électriques (10) dans le faisceau de fils électriques de réaliser une fonction de circuits complexes.

2. Procédé de production d'un faisceau de fils électriques selon la revendication 1, comprenant en outre l'étape S30 réalisée après l'étape S20, dans lequel l'étape S30 comprend : le retrait de l'isolant (20) et des conducteurs de faisceau de fils électriques enveloppés (10) de la cavité de moule (31).

3. Procédé de production d'un faisceau de fils électriques selon la revendication 1, dans lequel, à l'étape S10, au moins deux des conducteurs de faisceau de fils électriques (10) sont électriquement connectés par le sertissage et/ou le soudage et/ou la connexion d'impression 3D et/ou la connexion de frittage laser et/ou l'impression de point de connexion.

4. Procédé de production d'un faisceau de fils électriques selon la revendication 1, dans lequel, à l'étape S10, le conducteur de faisceau de fils électriques (10) est étendu le long d'une ligne droite ou d'une ligne courbe ; ou
à l'étape S10, la pluralité de conducteurs de faisceau de fils électriques (10) est répartie dans un même plan, ou répartie et étendue dans un espace.

5. Procédé de production d'un faisceau de fils électriques selon la revendication 1, dans lequel l'étape S10 adopte un ou plusieurs processus choisis parmi un processus d'impression 3D, un processus de frittage de poudre laser, un processus de moulage par injection de métal, un processus de soustraction laser, un processus d'impression à encre conductrice et un processus de carte de circuit imprimé ; ou
à l'étape S20, l'isolant (20) est formé par un processus d'impression 3D.

6. Procédé de production d'un faisceau de fils électriques selon la revendication 1, dans lequel le procédé de production d'un faisceau de fils électriques adopte un dispositif d'alimentation en fils électriques (40) ;
à l'étape S10, les conducteurs de faisceau de fils électriques (10) sont délivrés dans la cavité de moule (31) par le dispositif d'alimentation en fils électriques (40).

7. Fil électrique qui est produit par le procédé de production d'un de faisceau de fils électriques selon l'une quelconque des revendications 1 à 6,
dans lequel le faisceau de fils électriques comprend une pluralité de conducteurs de faisceau de fils électriques (10) et un isolant (20), des espaces sont ménagés entre les conducteurs de faisceau de fils électriques (10), et l'isolant (20) enveloppe les conducteurs de faisceau de fils électriques (10) et est rempli dans les espaces, des pièces de support (32) sont disposées dans l'isolant (20) à des intervalles le long d'une direction axiale des conducteurs de faisceau de fils électriques (10) pour supporter les conducteurs de faisceau de fils électriques (10), chacune des pièces de support (32) comprend une surface latérale (321) et une surface périphérique (322) ;
dans lequel la surface latérale (321) et au moins la surface périphérique (322) sont connectées à l'isolant (20), les conducteurs de faisceau de fils électriques (10) traversent la surface latérale (321) ou entrent en contact avec la surface périphérique (322), l'isolant (20) forme une structure intégrée avec les pièces de support (32), les pièces de support (32) servent de partie du faisceau de fils électriques produit, et la pièce de support (32) et l'isolant(20) sont composés d'un même matériau ; et
au moins deux des conducteurs de faisceau de fils électriques (10) sont électriquement connectés l'un à l'autre, pour permettre à la pluralité de conducteurs de faisceau de fils électriques (10) dans le faisceau de fils électriques de réaliser une fonction de circuits complexes.

8. Faisceau de fils électriques selon la revendication 7, dans lequel le faisceau de fils électriques comprend un logement (30) doté d'une cavité de moule (31) ;
les conducteurs de faisceau de fils électriques (10) sont agencés dans la cavité de moule (31) ; et
les conducteurs de faisceau de fils électriques (10), l'isolant (20) et le logement de moulage (30) forment une structure intégrée.

9. Faisceau de fils électriques selon la revendication 7, dans lequel le conducteur de faisceau de fils électriques (10) s'étend le long d'une ligne droite ou d'une ligne courbe ; ou,
la pluralité de conducteurs de faisceau de fils électriques (10) est répartie dans un même plan, ou répartie et étendue dans un espace.

10. Faisceau de fils électriques selon la revendication 7, dans lequel un matériau du conducteur de faisceau de fils électriques (10) comprend un matériau non métallique, qui est un ou plusieurs matériaux choisis dans le groupe constitué d'une céramique conductrice, d'un conducteur contenant du carbone, d'un électrolyte solide, d'un conducteur mixte et d'un matériau polymère conducteur ;
de préférence dans lequel
le conducteur contenant du carbone est un ou plusieurs matériaux choisis dans le groupe constitué de poudre de graphite, de matériau de nanotube de carbone et de matériau de graphène.

11. Faisceau de fils électriques selon la revendication 7, dans lequel le conducteur de faisceau de fils électriques (10) présente une aire de section transversale de 0,1 mm² à 260 mm² ; ou
l'isolant (20) présente une épaisseur de 0,03 mm à 5 mm.

12. Faisceau de fils électriques selon la revendication 7, dans lequel l'isolant (20) est composé d'un ou de plusieurs matériaux choisis dans le groupe constitué de polychlorure de vinyle, de polyuréthane, de nylon, de polypropylène, de caoutchouc de silicone, de polyoléfine réticulée, de caoutchouc synthétique, d'élastomère de polyuréthane, de polyéthylène réticulé et de polyéthylène ;
de préférence dans lequel
l'isolant (20) présente une résistance au claquage de 0,3 KV/mm à 35 KV/mm.
